# EUROPEAN PATENT SPECIFICATION

(11) **EP 3 542 139 B1**
(45) Date of publication and mention of the grant of the patent: **17.03.2021**
(21) Application number: 17817883.6
(22) Date of filing: 21.11.2017
(51) Int. Cl.: G01L 1/14, G01L 3/10, G01L 3/14

(54) **MULTI-SENSING SYSTEM FOR DETECTING AND MEASURING TORQUE AND/OR BENDING MOMENT**
MEHRFACHERFASSUNGSSYSTEM ZUR DETEKTION UND MESSUNG DES DREHMOMENTS UND/ODER BIEGEMOMENTS
SYSTÈME MULTI-DÉTECTION POUR DÉTECTER ET MESURER UN MOMENT DE COUPLE ET/OU DE FLEXION

(30) Priority: 21.11.2016 IT 201600117161
(43) Date of publication of application: 25.09.2019
(73) Proprietor: Indiotech S.r.l., 42014 Castellarano (IT)
(72) Inventor: LASAGNI, Marco, 42124 Reggio Emilia (IT); SERENI, Gabriele, 42014 Castellarano (IT)
(74) Representative: Modiano, Micaela Nadia
(86) International application number: PCT/IB2017/057295
(87) International publication number: WO 2018/092112

(56) References cited:
- FR-A1- 2 909 760
- JP-A- H02 280 025
- US-A- 5 353 648
- US-A1- 2009 010 582

## Description

The present invention relates to a multi-sensing system for detecting and measuring twisting moment (or torque) and/or bending moment (or couple), which belong to static or dynamic mechanical physical values. The system according to the present invention is particularly, although not exclusively, useful and practical in the area of detecting and measuring twisting and/or bending moment of a mechanical shaft, i.e. of a longitudinally-extended element for the transmission of rotary motion.

Nowadays, systems are known for proximity detection and measurement based on inductive sensors, which use eddy currents, from which the information of interest can be obtained.

In particular, these conventional systems measure the response of a resonant circuit, i.e. of an oscillator, to variations of impedance which depend on the quantity of eddy currents induced. Impedance is a physical value: it is the opposition force of a circuit upon the passage of an alternating electric current or, more generally, of a variable electric current.

The eddy currents, and hence also the impedance variations, are caused by the relative movement of a target element with respect to a sensor element, constituted for example by a coil, or vice versa.

Impedance variations in turn cause variations in amplitude and frequency of the oscillating signal, and these can be used to find the change in position and to carry out measurements of proximity and position (linear or angular).

In essence, the relative movement between the sensor element and the target element produces a variation in the inductive electric coupling between the sensor element and the target element, which generates eddy currents from which with suitable processing it is possible to find the variation in position and carry out measurements of proximity and position (linear or angular).

Currently, systems are also known for detecting and measuring twisting moment (or couple) and/or bending moment. Examples of these known systems are disclosed in prior art documents JP H02 280025 A, FR 2909760 A1, US 5353648 A, and US 2009/010582 A1.

However, such conventional detection and measurement systems are not devoid of drawbacks, among which is the fact that they are suitable for performing measurements solely and exclusively of a single, specific physical value (only twisting moment or only bending moment), and they are not adapted to perform measurements of a plurality of physical values, thus making it possible to recognize and separate the different characteristics of the stress, in particular twisting and bending moment.

Another drawback of conventional systems for detecting and measuring twisting moment (or couple) and/or bending moment consists in that they present considerable encumbrances when compared with other types of sensor systems, encumbrances that cause evident difficulties in application on mechanical components or on mechanical structures to be monitored, with consequent limitations on use.

A further drawback of conventional systems for detecting and measuring twisting moment (or couple) consists in that they require mechanical modifications to be made to the mechanical components or to the mechanical structures to be monitored, such as for example the interruption of a mechanical shaft.

For example during production of these components, with the magnetization of a portion of a mechanical shaft. Again for example, when measuring couple with a conventional torsionmeter, it is necessary to position the torsionmeter in line with the shaft of which the twisting couple is to be measured, and therefore to interrupt the shaft by designing additional mechanical parts (for example mechanical joints) for the correct positioning and fixing of the conventional measurement device. Again for example, stator components may be necessary for the measurement.

Another drawback of conventional systems for detecting and measuring twisting moment (or couple) and/or bending moment consists in that they have a specific measurement range and a specific measurement sensitivity, which are predefined and non-modifiable, and which, if exceeded, compromise the operation of the system sensor.

Finally, a drawback of conventional systems for detecting and measuring twisting moment (or couple) and/or bending moment consists in that they are not capable of separating the bending and twisting components of the stresses of the mechanical components or of the mechanical structures to be monitored, thus giving rise to measurements that are sometimes incorrect.

The aim of the present invention is to overcome the limitations of the known art described above, by devising a multi-sensing system for detecting and measuring twisting and/or bending moment that makes it possible to simultaneously perform one or more measurements of physical values, each value with different sensitivity of measurement, thus making it possible to measure and separate the components of twisting and/or bending moment.

Within this aim, an object of the present invention is to conceive of a multi-sensing system for detecting and measuring twisting and/or bending moment, by taking advantage of the physical principle of eddy currents, in which sensor elements and target elements can operate even on planes that are not necessarily parallel.

Another object of the present invention is to devise a multi-sensing system for detecting and measuring twisting and/or bending moment that has reduced encumbrances, thus enabling its easy application directly to mechanical components or to the mechanical structures to be monitored, with respect to conventional torsionmeters.

Another object of the present invention is to conceive of a multi-sensing system for detecting and measuring twisting and/or bending moment that does not require mechanical modifications to be made to the mechanical components or to the mechanical structures to be monitored, such as for example the interruption of a mechanical shaft, since it can be applied directly thereto, even in an after-market context.

Another object of the present invention is to devise a multi-sensing system for detecting and measuring twisting and/or bending moment that makes it possible to modify at will the measurement range and the measurement sensitivity, on the basis of the requirements of the context.

A still further object of the present invention is to provide a multi-sensing system for detecting and measuring twisting and/or bending moment that is highly reliable, easily and practically implemented, and low cost when compared to the known art.

This aim and these and other objects which will become better evident hereinafter are achieved by a multi-sensing system for detecting and measuring twisting and/or bending moment as defined by independent claim 1.

Further characteristics and advantages of the invention will become better apparent from the description of some preferred, but not exclusive, embodiments of the multi-sensing system for detecting and measuring twisting and/or bending moment according to the invention, which are illustrated by way of non-limiting example with the assistance of the accompanying drawings, wherein:
Figures 1a and 1b are respectively a side view and a perspective view, both exploded, of an embodiment of the multi-sensing system for detecting and measuring twisting and/or bending moment, according to the present invention, applicable to a longitudinally-extended mechanical component;
Figure 2 is a schematic perspective view of a longitudinally-extended shaft of which the twisting and/or bending moment are to be measured by way of an embodiment of the multi-sensing system for detecting and measuring twisting and/or bending moment, according to the present invention;
Figures 3a and 3b are respectively a front elevation view and a perspective view of a schematic representation of the multi-sensing system for detecting and measuring twisting and/or bending moment, according to the present invention, applicable to a longitudinally-extended mechanical component;
Figure 4 is a perspective view of a schematic representation of the multi-sensing system for detecting and measuring twisting and/or bending moment, according to the present invention, applicable to a longitudinally-extended mechanical component;
Figures 5a and 5b are respectively a perspective view and a block diagram of a schematic representation of the multi-sensing system for detecting and measuring twisting and/or bending moment, according to the present invention, applicable to a longitudinally-extended mechanical component;
Figure 6 is a perspective view of an advanced embodiment of the multi-sensing system for detecting and measuring twisting and/or bending moment, according to the present invention, applicable to a longitudinally-extended mechanical component;
Figures 7a, 7b and 7c are respectively a perspective view, a perspective detail and a detail of operation of a first advanced embodiment of the multi-sensing system for detecting and measuring twisting and/or bending moment, according to the present invention, applicable to a longitudinally-extended mechanical component;
Figures 8a, 8b and 8c are respectively a perspective view, a perspective detail and a detail of operation of a second advanced embodiment of the multi-sensing system for detecting and measuring twisting and/or bending moment, according to the present invention, applicable to a longitudinally-extended mechanical component;
Figures 9a and 9b are block diagrams that schematically illustrate the electronic components of the terminal circuit assembly and of the remote circuit assembly, respectively, of an embodiment of the multi-sensing system for detecting and measuring twisting and/or bending moment, according to the present invention.

With reference to the figures, the multi-sensing system for detecting and measuring twisting and/or bending moment according to the invention, generally designated by the reference numeral 5, comprises substantially at least one sensor element 12, at least one conductor target element 60 arranged proximate to the at least one sensor element 12, an anchoring and support assembly 65, and a terminal circuit assembly 10 which is configured to manage the at least one sensor element 12. Preferably, the at least one sensor element 12 and the at least one target element 60 are facing each other.

In a preferred embodiment of the invention, the multi-sensing system 5 for detecting and measuring twisting and/or bending moment comprises at least one pair of sensor elements 12a and 12b. In such case, the at least one conductor target element 60 can be arranged in the space present between the pair of sensor elements 12a and 12b. In an embodiment of the invention, the multi-sensing system 5 for detecting and measuring twisting and/or bending moment comprises at least one pair of target elements 60, each one arranged proximate to a respective sensor element 12a and 12b.

It should be noted that hereinafter the multi-sensing system 5 for detecting and measuring twisting and/or bending moment will be described, for greater clarity, with specific reference to the aforesaid preferred embodiment.

The sensor elements 12a and 12b are inductive elements or inductors, preferably planar in shape, which can be provided using various conventional technologies, such as for example winding turns of conducting material around a metallic core or around air (a coil), spray-depositing conductive material on organic and inorganic sublayers, copper tracks on a printed circuit board (PCB) or that can be integrated on a chip with current microelectronic technologies.

The anchoring and support assembly 65 is adapted to rigidly hold the multi-sensing system 5 according to the invention at a specific point or a specific cross-section 71, 72 on the outer surface of a mechanical component or a mechanical structure 70 to be monitored, such as for example a shaft 70. The anchoring and support assembly 65 is adapted to support in space both the pair of sensor elements 12a and 12b, consequently accommodating the terminal circuit assembly 10, and the target element 60.

The anchoring and support assembly 65 has a hollow shape, preferably ring-shaped, therefore comprising an opening 50 which is adapted to allow the passage of the mechanical component or of the mechanical structure 70 to be monitored.

Consequently, in such case the mechanical component or the mechanical structure 70 to be monitored passes through the multi-sensing system 5 according to the invention, in particular through the opening 50 of the anchoring and support assembly 65.

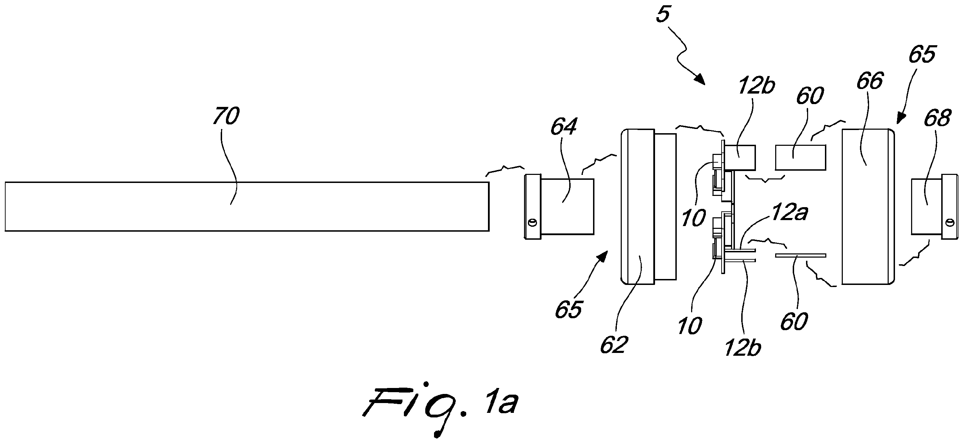

In an embodiment of the invention, with particular reference to Figures 1a, 1b, 3a, 3b and 4, the anchoring and support assembly 65 comprises at least one first support 62 for the pair of sensor elements 12a and 12b, first anchoring means 64 of the first support 62, at least one second support 66 for the target element 60, and second anchoring means 68 of the second support 66.

The sensor elements 12a and 12b are spaced apart from each other and rigidly held to the first support 62, for example at an upper end thereof. The first support 62 is adapted to support in space the pair of sensor elements 12a and 12b.

The target element 60 is a conducting element, preferably planar in shape, which can be made of conductive material, preferably metallic; or the target element 60 can comprise conductive material in at least one portion thereof, for example on all of its surface or on the surface of one of its faces.

The target element 60 can have different shapes, depending on the type of application and on the measurement specifications (sensitivity, range and linearity of measurement).

In an embodiment of the multi-sensing system 5 according to the invention, the target element 60 can be provided directly on the mechanical component or mechanical structure 70, by allowing for it in the design and manufacture of the latter.

The target element 60 is rigidly held to the second support 66, for example at an upper end thereof. The second support 66 is adapted to support the target element 60 in space.

The first anchoring means 64 and the second anchoring means 68 are adapted to rigidly hold the first support 62 and the second support 66, respectively, for example a lower end thereof, to a specific point or specific cross-section 71, 72 on the outer surface of a mechanical component or a mechanical structure 70 to be monitored, which can be for example a shaft, a beam, a mechanical arm, and so on.

The first anchoring means 64 of the first support 62 and the second anchoring means 68 of the second support 66, both of which are adapted to rigidly hold the multi-sensing system 5 to the mechanical component or mechanical structure 70 to be monitored, can comprise various conventional connection means, such as for example self-tapping screws or grub screws 51, adhesives, rivets, keying, bolts, welds, and so on. These connection means are also selected on the basis of the materials used to make the first support 62 and/or the mechanical component or mechanical structure 70, as well as on the basis of the design choices.

In an embodiment of the multi-sensing system 5 according to the invention, the first support 62 and the second support 66 can be provided directly on the mechanical component or mechanical structure 70, by allowing for it in the design and manufacture of the latter. Clearly, in such case the first anchoring means 64 and the second anchoring means 68 are not necessary in order to rigidly hold the first support 62 and the second support 66, respectively, to the mechanical component or to the mechanical structure 70.

Both the first support 62 for the pair of sensor elements 12a and 12b and the first anchoring means 64 of the first support 62, and also the second support 66 for the target element 60 and the second anchoring means 68 of the second support 66, have a hollow shape, preferably ring-shaped, and therefore each one comprises an opening 50b, 50a and 50c (the opening of the second anchoring means 68 is not shown), respectively, which is adapted to allow the passage of the mechanical component or of the mechanical structure 70 to be monitored.

Consequently, in such case the mechanical component or the mechanical structure 70 to be monitored passes through the multi-sensing system 5 according to the invention, in particular through an opening 50 of the anchoring and support assembly 65.

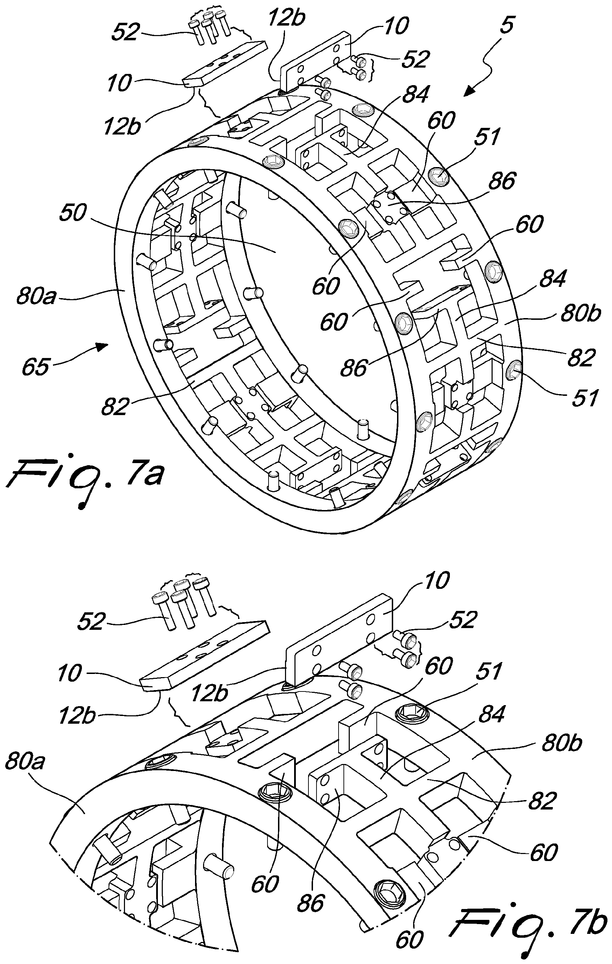

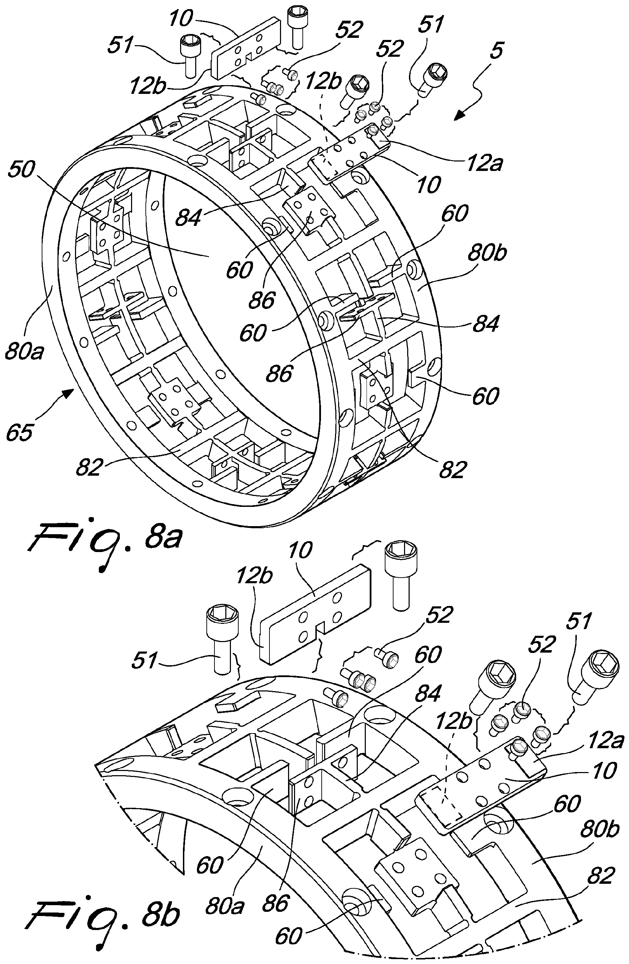

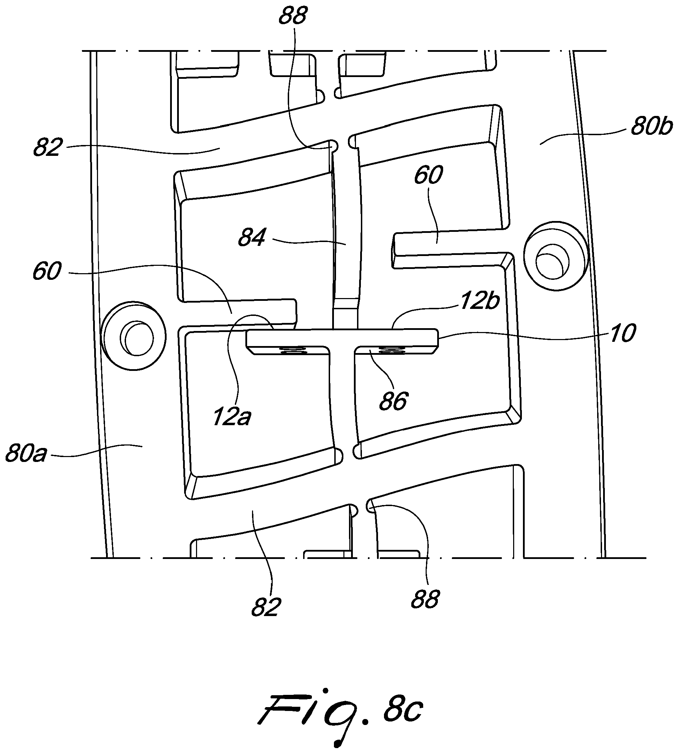

In an embodiment of the invention, with particular reference to Figures 7a-7c and 8a-8c, the anchoring and support assembly 65 of the multi-sensing system 5 for detecting and measuring twisting and/or bending moment according to the invention comprises a first anchoring and support ring 80a and a second anchoring and support ring 80b, facing each other, both of which are adapted to rigidly hold the multi-sensing system 5 to the mechanical component or mechanical structure 70 to be monitored. In particular, in order to implement this anchoring, the first anchoring and support ring 80a and the second anchoring and support ring 80b can comprise various conventional connection means, such as for example self-tapping screws or grub screws 51, adhesives, rivets, keying, bolts, welds, and so on.

The target elements 60 are rigidly coupled to or are provided directly on the first anchoring and support ring 80a and the second anchoring and support ring 80b, facing each other, along the inner face of the first anchoring and support ring 80a or of the second anchoring and support ring 80b.

The first anchoring and support ring 80a and the second anchoring and support ring 80b are held to each other by way of a plurality of connecting beams 82, which together constitute a single-piece structure of the anchoring and support assembly 65.

The plurality of connecting beams 82, in addition to holding the first anchoring and support ring 80a and the second anchoring and support ring 80b, enable this single-piece structure to maintain the degree of torsional freedom, offering substantially no rigidity to torsion.

Advantageously, the single-piece structure simplifies the procedure of mounting the multi-sensing system 5 according to the invention on the mechanical component or mechanical structure 70, in that it does not require any kind of calibration or taring of the sensor elements 12a and 12b and/or of the terminal circuit assembly 10 in the step of mounting the multi-sensing system 5 according to the invention on the mechanical component or mechanical structure 70. Furthermore, the single-piece structure improves the alignment between the sensor elements 12a and 12b and the corresponding target element 60.

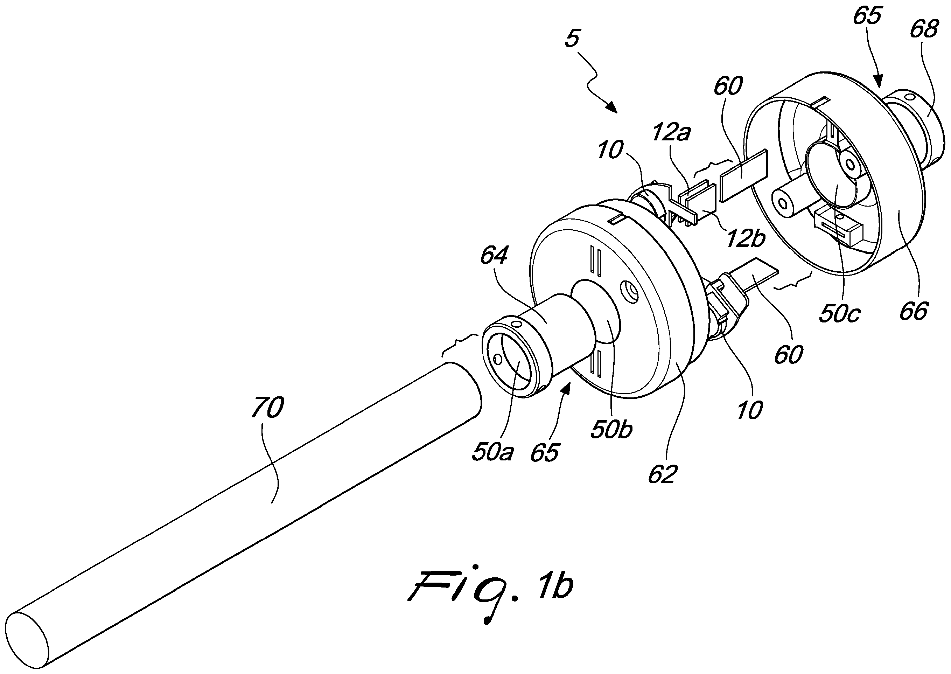

Comparing this embodiment to the one shown in Figures 1a and 1b, the single-piece structure, which as mentioned comprises the first anchoring and support ring 80a, the second anchoring and support ring 80b and the plurality of connecting beams 82, substitutes both the first support 62 for the pair of sensor elements 12a and 12b and the first anchoring means 64 of the first support 62, and also the second support 66 for the target element 60 and the second anchoring means 68 of the second support 66.

At the same time, the plurality of connecting beams 82 are the base for holding at least one central beam 84. In turn, the central beam 84 is the base for holding at least one respective supporting plate 86 for the installation of the terminal circuit assembly 10, with which the sensor elements 12a and 12b are associated. The terminal circuit assembly 10 is installed on the supporting plate 86 by way of adapted conventional connection means, such as for example screws 52.

Both the first anchoring and support ring 80a and also the second anchoring and support ring 80b each comprise an opening 50, which is adapted to allow the passage of the mechanical component or of the mechanical structure 70.

Consequently, the mechanical component or the mechanical structure 70 passes through the multi-sensing system 5 according to the invention, in particular through the single-piece structure of the anchoring and support assembly 65.

In order to measure both the twisting moment and also the bending moment, the single-piece structure of the anchoring and support assembly 65 comprises a plurality of adjacent spaces or slots in which are arranged the terminal circuit assembly 10, the sensor elements 12a and 12b associated with it, and the target elements 60, in alternating arrangement and orientation for the measurement of one value or the other.

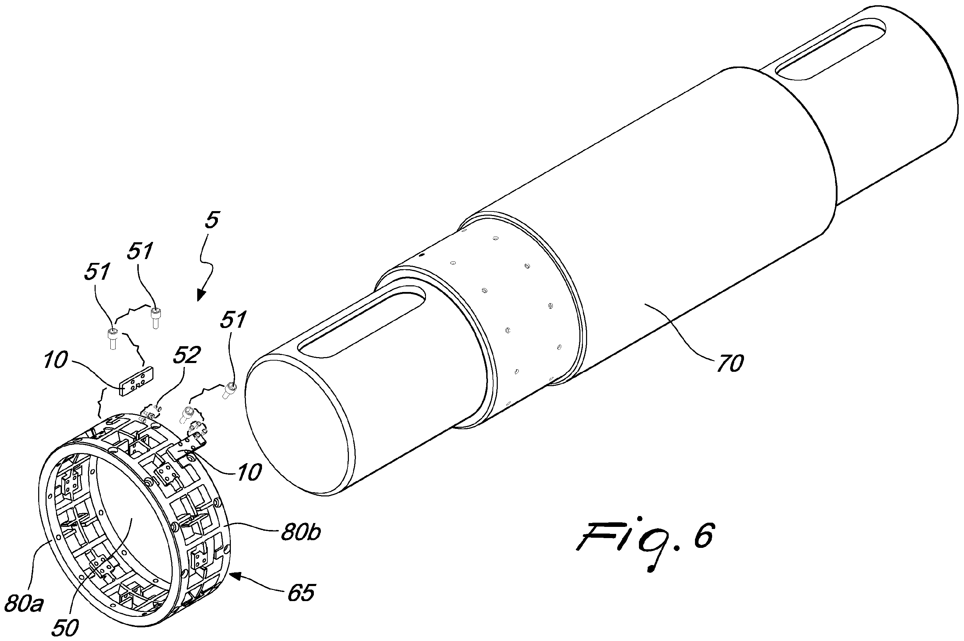

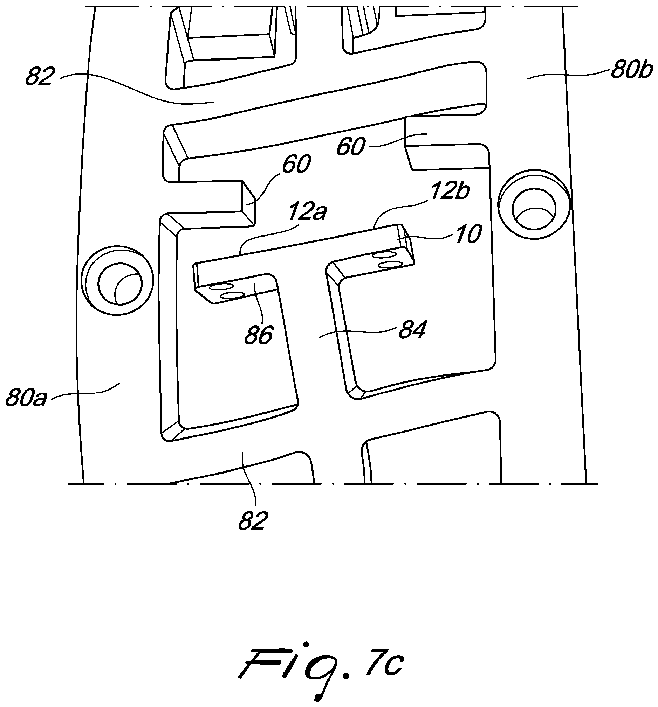

When there is a torsion between the two sections 71 and 72 of the mechanical component or mechanical structure 70 to which the first anchoring and support ring 80a and the second anchoring and support ring 80b are anchored, respectively, a deformation occurs of the multi-sensing system 5, in particular of the single-piece structure of the anchoring and support assembly 65, similar to that shown in Figures 6c and 7c. As can be seen, the deformation of the single-piece structure leads to an approaching/distancing between the sensor elements 12a and 12b and the target element 60.

In an embodiment of the invention, with particular reference to Figures 7a-7c, the central beam 84 is rigidly held to at least one connecting beam 82. In particular, in the slot for measuring the twisting moment the central beam 84 is truncated, it therefore being coupled to a single connecting beam 82, and the supporting plate 86 for the installation of the terminal circuit assembly 10 is coupled to the end of the truncation; while in the slot for measuring the bending moment the central beam 84 joins two adjacent connecting beams 82 and the supporting plate 86 for the installation of the terminal circuit assembly 10 is coupled in a central position.

In an embodiment of the invention, with particular reference to Figures 8a-8c, the central beam 84 is advantageously coupled to adjacent connecting beams 82 by way of contacts as precise as possible: to this end, the joints between the aforementioned beams 82 and 84 have a reduction in cross-section 88, so that each one of the joints will ideally behave like a hinge. In particular, both in the slot for measuring the twisting moment and also in the slot for measuring the bending moment the central beam 84 joins two adjacent connecting beams 82 and the supporting plate 86 for the installation of the terminal circuit assembly 10 is coupled in a central position.

This solution ensures both a better parallelism between the sensor elements 12a and 12b and the corresponding target element 60, during the deformation as shown in Figure 7c, and also a better rigidity and insensitivity to vibrations.

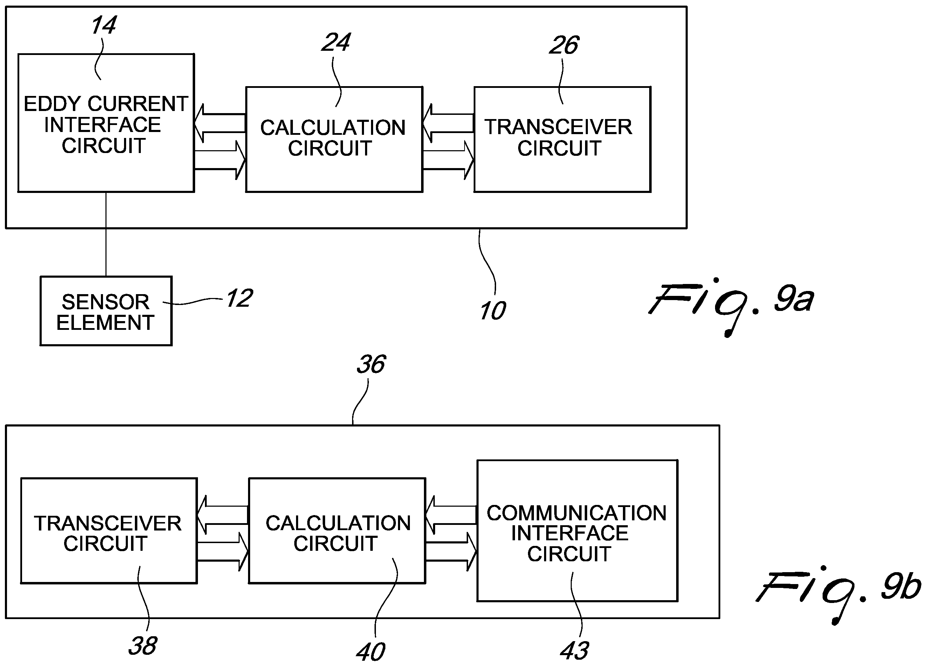

With reference to Figures 9a and 9b, the terminal circuit assembly 10 (also known as an "end device") is functionally connected to the sensor element 12, or to the pair of sensor elements 12a and 12b, in general for their management and in particular for receiving information detected by the sensor element 12, or by the sensor elements 12a and 12b. The terminal circuit assembly 10 is preferably enclosed within the first support 62 for the pair of sensor elements 12a and 12b.

The terminal circuit assembly 10 comprises an interface circuit for eddy current sensors 14, a calculation circuit 24 and a transceiver circuit 26, which are connected to each other in series.

The interface circuit for eddy currents 14 is configured to energize the sensor elements 12, 12a and 12b, which, by emitting a time-varying electromagnetic field and by being in relative motion with respect to the target element 60, induce an inductive variation of the electric coupling, with the consequent eddy currents. The distancing or the approach between the sensor elements 12a and 12b and the target element 60 modify the inductive electric coupling between them, by way of electromagnetic induction, consequently modulating the quantity of eddy currents induced.

In a preferred embodiment of the invention, the interface circuit for eddy currents 14 comprises a circuit for detecting and conditioning the signal, which comprises an oscillator, preferably of the LC type.

The oscillator is single-ended, if the multi-sensing system 5 comprises a single sensor element 12, or differential, if the multi-sensing system 5 comprises a pair of sensor elements 12a and 12b.

The oscillator is connected to the sensor elements 12, 12a and 12b. The equivalent impedance variation of the sensor elements 12, 12a and 12b in the oscillator determines a variation of the frequency and amplitude of oscillation.

The interface circuit for eddy currents 14 is furthermore configured to acquire the signal for the measuring carried out by way of the sensor elements 12, 12a and 12b.

The control logic of the multi-sensing system 5 according to the invention is implemented in the calculation circuit 24 of the terminal circuit assembly 10. The control logic of the calculation circuit 24 can be implemented via software on platforms such as microcontrollers, microprocessors, Digital Signal Processors (DSP), Field Programmable Gate Array (FPGA), or via hardware on platforms such as Application Specific Integrated Circuit (ASIC).

The digital signal is processed by the calculation circuit 24 in order to calculate the value of a given physical value, in particular twisting and/or bending moment; the methods of this processing depend on the physical value to be measured. The processing of the digital signal carried out by the calculation circuit 24 makes it possible to have as output the measurement of twisting and/or bending moment and optional indirect measurements. These measurements are digitalized, and are adapted to be interfaced with other electronic devices, such as for example the remote circuit assembly 36 or at least one remote external platform for acquisition.

The transceiver circuit 26 of the terminal circuit assembly 10 is configured to transmit and receive digital data, in particular digital measurement data, with a remote device, such as for example the remote circuit assembly 36 or at least one remote external platform for acquisition, processing and/or display.

The transmission and reception of the digital data can be performed according to various digital communication protocols, which can operate over wired or wireless connections.

The terminal circuit assembly 10 is electrically powered by an energy source, such as for example a battery, connected thereto. The energy source also electrically powers, by way of the interface circuit for eddy currents 14, the sensor elements 12, 12a and 12b.

In an embodiment of the invention, the multi-sensing system 5 for detecting and measuring twisting and/or bending moment furthermore comprises a remote circuit assembly 36 (also known as a "master device"), which is configured to receive the digital data, in particular digital measurement data, from the terminal circuit assembly 10, process them by way of a control logic, and transmit the processed digital data to at least one remote external platform for acquisition, processing and/or display. The remote circuit assembly 36 can be configured to control a plurality of terminal circuit assemblies 10.

The remote circuit assembly 36 comprises a transceiver circuit 38, a calculation circuit 40 and a communication interface circuit 43, which are connected to each other in series.

The transceiver circuit 38 of the remote circuit assembly 36 is configured to transmit and receive digital data with a remote device, such as for example the terminal circuit assembly 10 or at least one remote external platform for acquisition, processing and/or display.

The transmission and reception of the digital data can be performed according to various digital communication protocols, which can operate over wired or wireless connections.

The control logic is implemented in the calculation circuit 40 of the remote circuit assembly 36. The control logic of the calculation circuit 40 can be implemented via software on platforms such as microcontrollers, microprocessors, DSPs and FPGAs, or via hardware on platforms such as ASICs.

The communication interface circuit 43 of the remote circuit assembly 36 is configured to functionally connect (in input/output) the same remote circuit assembly 36 to at least one remote external platform for acquisition, processing and/or display.

The remote external platform is a system or an intelligent electronic device, configured to take decisions and control more complex systems, such as for example an electronic controller, a PLC (Programmable Logic Controller), a data logging module, a computer, a tablet computer, a smartphone and other consumer electronic devices. This remote external platform is also configured to display the value of the physical values detected and measured by the multi-sensing system 5. The remote external platform is furthermore configured to control the measurement, by modifying the sensitivity of the multi-sensing system 5 according to the requirements of the context.

The remote circuit assembly 36 is electrically powered by an energy source, such as for example a battery, connected thereto.

The communication between the terminal circuit assembly 10 and the remote circuit assembly 36, in particular between the transceiver circuit 26 of the former and the transceiver circuit 38 of the latter, is bidirectional and enables an operator to modify from a remote external platform the measurement specifications during the operation of the multi-sensing system 5 according to the invention.

The multi-sensing system 5 for detecting and measuring twisting and/or bending moment according to the invention makes it possible to statically and dynamically measure mechanical values, i.e. the stress status of a mechanical component or a mechanical structure 70, based on the direct measurement of the relative movement between two or more points of the mechanical component or of the mechanical structure 70, with sub-micrometric sensitivity.

With particular reference to the embodiment illustrated in Figures 1a and 1b, operation of the multi-sensing system 5 for detecting and measuring twisting and/or bending moment according to the invention, if used for the simultaneous measurement of the twisting moment (or couple) and of the bending moment (or couple), is described below.

The two pairs of sensor elements 12a and 12b are held to the cross-section 72 of the shaft 70, by way of the first support 62 and the first anchoring means 64, for example a first bush with grub screws. The two target elements 60, one for each pair of sensor elements 12a and 12b, are held to the cross-section 71 of the shaft 70, by way of the second support 66 and the second anchoring means 68, for example a second bush with grub screws.

In this use case, by way of a single first support 62 it is possible to comprise in the multi-sensing system 5 according to the invention two separate pairs of sensor elements 12a and 12b, arranged perpendicular to each other, anchored to a single cross-section 72 of the shaft 70. Similarly, by way of a single second support 66 it is possible to comprise in the multi-sensing system 5 according to the invention two different target elements 60, arranged perpendicular to each other, anchored to a single cross-section 71 of the shaft 70.

The multi-sensing system 5 thus configured comprises two separate terminal circuit assemblies 10, independent of each other. In particular, each pair of sensor elements 12a and 12b is functionally connected to a respective interface circuit for eddy currents 14 of the terminal circuit assembly 10.

Note that the embodiment of the multi-sensing system 5 according to the invention illustrated here comprises two pairs of sensor elements 12a and 12b, two target elements 60, and two respective terminal circuit assemblies 10, independent of each other, in order to obtain both the measurement of the twisting moment and also the measurement of the bending moment, by virtue of the mutually perpendicular arrangement of the grouping illustrated in the lower part of the multi-sensing system 5 with respect to the grouping illustrated in the upper part of the multi-sensing system 5, and vice versa.

In particular, the grouping illustrated in the upper part of the multi-sensing system 5 is adapted to measure the twisting moment, while the grouping illustrated in the lower part of the multi-sensing system 5 is adapted to measure the bending moment.

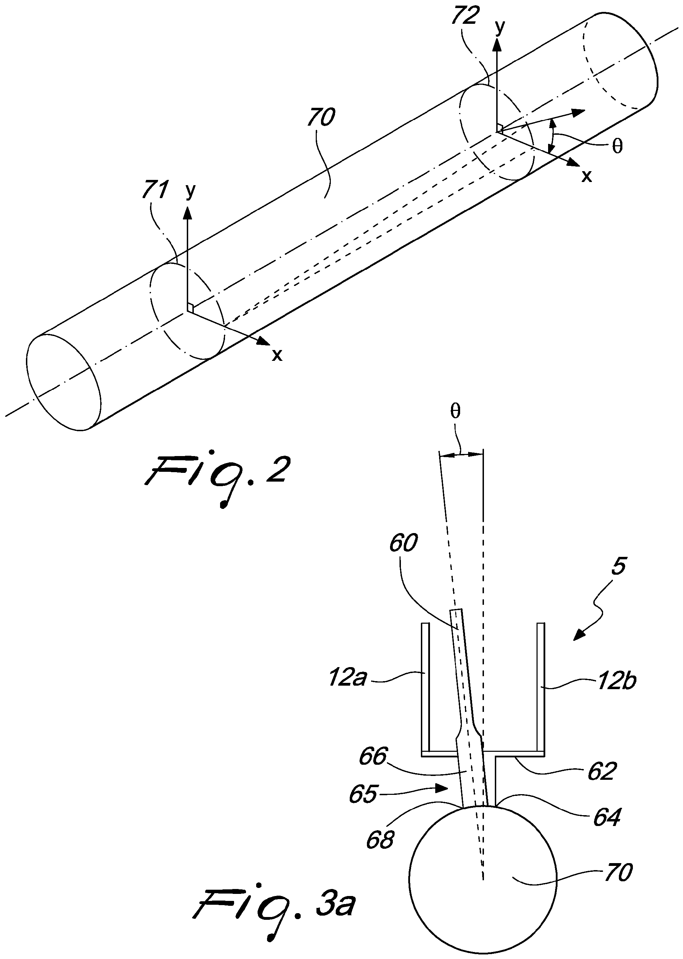

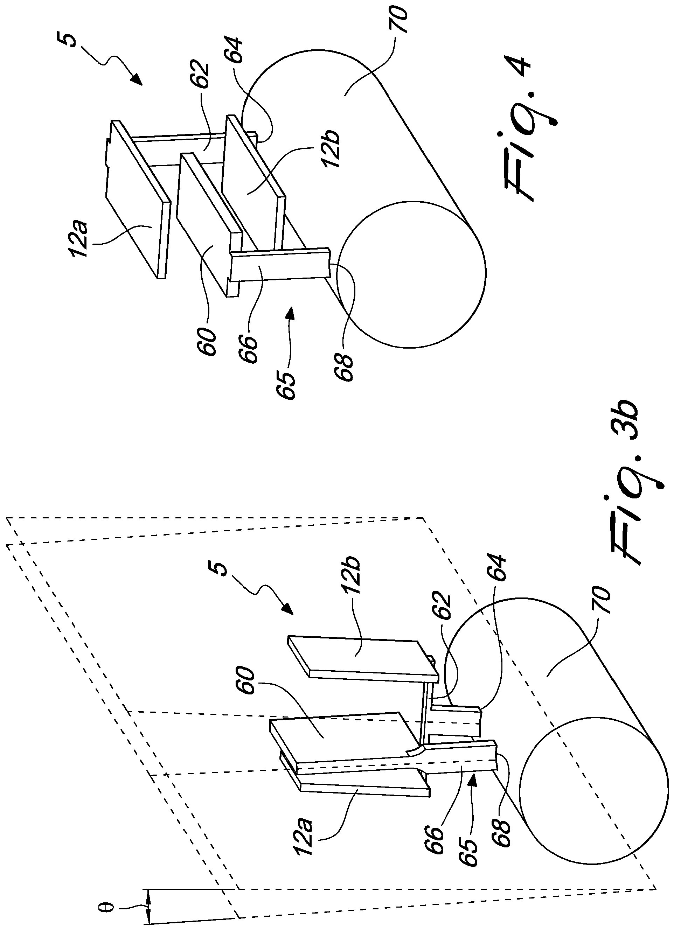

With particular reference to Figures 2, 3a and 3b, operation of the multi-sensing system 5 for detecting and measuring twisting and/or bending moment according to the invention, if used for the measurement of the twisting moment (or couple), is described below.

Application of a twisting moment causes the deformation of the mechanical component or of the mechanical structure 70, such as for example the illustrated shaft 70, in particular a relative rotation (on the plane x-y) between two parallel generic cross-sections 71 and 72, the normal of which has the same direction as the twisting moment vector.

In this use case, the multi-sensing system 5 according to the invention makes it possible to arrive at the value of the twisting moment by measuring the relative rotation between the parallel generic cross-sections 71 and 72 of the shaft 70 (angle 0).

With particular reference to Figure 4, operation of the multi-sensing system 5 for detecting and measuring twisting and/or bending moment according to the invention, if used for the measurement of the bending moment (or couple), is described below.

Application of a bending moment causes the deformation of the mechanical component or of the mechanical structure 70, such as for example the illustrated shaft 70, in particular a relative rotation (on the plane y-z) between two parallel generic cross-sections 71 and 72, the normal of which is perpendicular to the direction of the bending moment vector.

In this use case, the multi-sensing system 5 according to the invention makes it possible to arrive at the value of the bending moment by measuring the relative rotation between the parallel generic cross-sections 71 and 72 of the shaft 70 (angle γ).

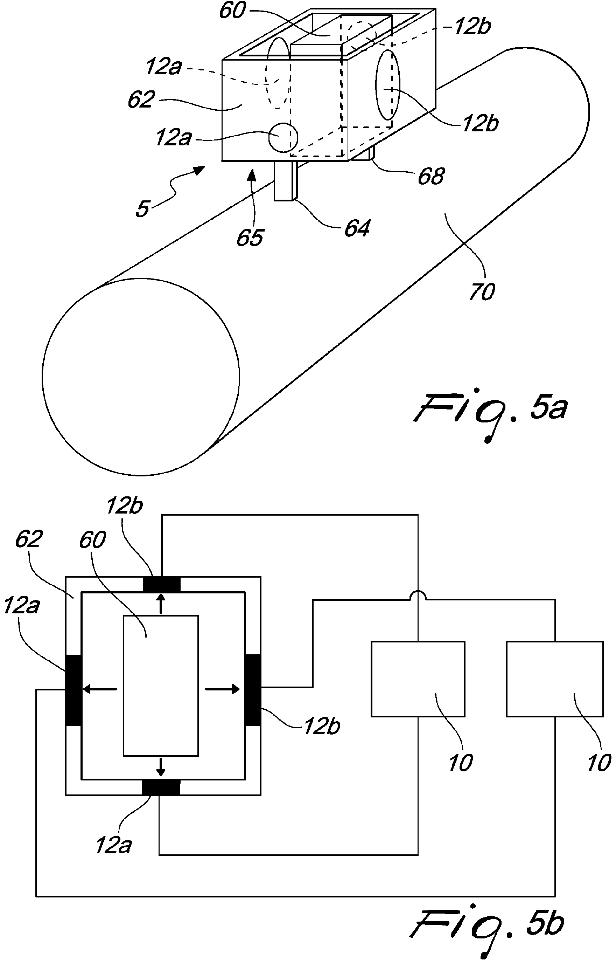

With particular reference to Figures 5a and 5b, operation of the multi-sensing system 5 for detecting and measuring twisting and/or bending moment according to the invention, if used for the simultaneous measurement of the twisting moment (or couple) and of the bending moment (or couple), is described below.

The two pairs of sensor elements 12a and 12b are held to the cross-section 72 of the shaft 70, by way of the first support 62 and the first anchoring means 64. The target element 60 is held to the cross-section 71 of the shaft 70, by way of the second support 66 and the second anchoring means 68. There is only one target element 60 for both pairs of sensor elements 12a and 12b.

In this use case, by way of a single first support 62 it is possible to comprise in the multi-sensing system 5 according to the invention two separate pairs of sensor elements 12a and 12b, anchored to a single cross-section of the shaft 70.

One of the two pairs of sensor elements 12a and 12b is arranged so as to be sensitive to the torsion of the shaft 70, while the other pair of sensor elements 12a and 12b is arranged so as to be sensitive to the bending of the shaft 70.

The multi-sensing system 5 thus configured comprises two separate terminal circuit assemblies 10, independent of each other. In particular, each pair of sensor elements 12a and 12b is functionally connected to a respective interface circuit for eddy currents 14.

The measurements of the twisting moment and/or of the bending moment are performed without direct contact between the sensor elements 12a and 12b and the target element 60, by way of inductive electric coupling, by way of electromagnetic induction.

The multi-sensing system 5 for detecting and measuring twisting and/or bending moment according to the invention makes it possible to increase the measurement sensitivity, by simultaneously taking advantage of two different factors of differential variation of the inductive electric coupling, by way of electromagnetic induction, between the sensor element 12, or the pair of sensor elements 12a and 12b, and the target element 60.

These two factors are: the variation of the distance between the sensor elements 12a and 12b and the target element 60; and the type and characteristics of the conductive material of the target element 60 and the variation of the conducting portion of the target element 60 at which the electromagnetic field generated by the sensor elements 12a and 12b is coupled.

It is possible to combine both factors of variation, both single-ended and differential, of the inductive electric coupling, without penalizing the consumption and complexity of the multi-sensing system 5, for example by using three-dimensional target elements 60 in which the sensitive portion of the target element 60 extends not just along the plane on which the target element 60 moves, but also in the direction perpendicular to this plane.

In this manner, independently of the type of movement of the target element 60, by optimizing its geometric shape in three dimensions and/or the thickness of the conductive material, preferably metallic, it is possible to reduce the distance between the sensor element 12, or the pair of sensor elements 12a and 12b, and the target element 60, and maximize the variation of the conducting portion of the target element 60 within the sensitivity space of the sensor element 12, or of the pair of sensor elements 12a and 12b.

In addition to this, the multi-sensing system 5 for detecting and measuring twisting and/or bending moment according to the invention makes it possible to have two or more different sensitivities in a specific measurement range, associating a target element 60 with different characteristics with each sensor element 12a or 12b.

The architecture of the multi-sensing system 5 according to the invention, if the interface circuit for eddy currents 14 comprises a differential oscillator with which a pair of sensor elements 12a and 12b is associated, renders the measurement of the twisting moment (or couple) and/or of the bending moment (or couple) insensitive to common mechanical vibrations.

The possibility of selectively increasing the measurement sensitivity of the multi-sensing system 5 can be useful in several industrial fields of application where it is necessary to have greater accuracy in a limited range of measurement.

In general, the multi-sensing system 5 according to the invention can internally comprise redundant elements, making the multi-sensing system 5 proper resistant to malfunctions and safety-critical.

In practice it has been found that the invention fully achieves the set aim and objects. In particular, it has been seen that the multi-sensing system for detecting and measuring twisting and/or bending moment thus conceived makes it possible to overcome the qualitative limitations of the known art, since it makes it possible to perform, even simultaneously, one or more measurements of physical values, each value with different sensitivity of measurement, thus making it possible to measure and separate the components of twisting and/or bending moment.

Using a single-ended or differential oscillator architecture, the multi-sensing system according to the present invention makes it possible to have a variable resolution for a same measurement of twisting and/or bending moment, by modifying the positioning, geometric shapes and dimensions (e.g. thickness) of the target elements coupled with the sensor elements driven by the single-ended or differential oscillator.

Another advantage of the multi-sensing system for detecting and measuring twisting and/or bending moment according to the present invention consists in that it takes advantage of the physical principle of eddy currents, and the sensor elements and the target elements comprised therein can even operate on planes that are not necessarily parallel.

Another advantage of the multi-sensing system for detecting and measuring twisting and/or bending moment according to the present invention consists in that it has reduced encumbrances, thus enabling its easy application directly to mechanical components or to the mechanical structures to be monitored, with respect to conventional torsionmeters.

Another advantage of the multi-sensing system for detecting and measuring twisting and/or bending moment according to the present invention consists in that it makes it possible to measure twisting and/or bending moment on different mechanical components with different strength cross-sections, such as for example transmission shafts, axial shafts, beams, stays, gearwheels, telescopic arms, lifting arms, joints, articulated joints, bushings, flanges, screws and components for assembly, plates, propellers, cotters, splines, and so on.

Another advantage of the multi-sensing system for detecting and measuring twisting and/or bending moment according to the present invention consists in that it does not require mechanical modifications to be made to the mechanical components or to the mechanical structures to be monitored, such as for example the interruption of a mechanical shaft, since it can therefore be applied directly thereto, even in an after-market context. For example, the multi-sensing system for detecting and measuring twisting and/or bending moment according to the present invention does not require the magnetization of the component or structure to be monitored, or of stator components for measurement, in particular in the specific case of measurement of the twisting moment (or couple), as required by conventional torsionmeters.

Furthermore, the multi-sensing system according to the present invention can be applied on mechanical components of any material, both metallic and nonmetallic, such as for example plastics or composite materials made of carbon fiber, glass and Kevlar, it being possible to monitor the physical values of these latter materials as well.

Also, the multi-sensing system according to the present invention can be fitted or removed much more rapidly than conventional detection and measurement systems, for example without interrupting the structural continuity of the component.

Another advantage of the multi-sensing system for detecting and measuring twisting and/or bending moment according to the present invention consists in that it makes it possible to modify at will the measurement range and the measurement sensitivity, on the basis of the requirements of the context, by acting on geometric shapes and dimensions (e.g. thickness) of the sensor elements 12a and 12b, of the target element 60 and of the respective supports 62 and 66, on the position of the anchoring means 64, 68 at specific points or specific cross-sections 71, 72, and on the distance between the sensor elements 12a and 12b and the target element 60.

Further advantages of the multi-sensing system for detecting and measuring twisting and/or bending moment according to the present invention consist of the high pass-band of measurement; the minimal inertial load for rotating or moving systems, also by virtue of the reduced weight and dimensions; and the capacity for measurement free from sensitivity to variations in temperature, or to dirt, oil and/or dust.

The invention, thus conceived, is susceptible of numerous modifications and variations, all of which are within the scope of the appended claims.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A multi-sensing system (5) for detecting and measuring twisting and/or bending moment, which comprises at least one sensor element (12, 12a, 12b) which is functionally connected to a terminal circuit assembly (10) which is configured to manage said at least one sensor element (12, 12a, 12b), and at least one target element (60) made of conducting material which is arranged proximate to said at least one sensor element (12, 12a, 12b), wherein said terminal circuit assembly (10) comprises an interface circuit for eddy current sensors (14) which is configured to excite using electromagnetic induction said at least one sensor element (12, 12a, 12b) so that a relative movement between said at least one sensor element (12, 12a, 12b) and said at least one target element (60) will induce a variation of intensity of said eddy currents on said target element (60), said target element (60) consequently inducing a variation of impedance at the terminals of said at least one sensor element (12, 12a, 12b), and in that it furthermore comprises an anchoring and support assembly (65) which is adapted to rigidly hold said multi-sensing system (5) to a mechanical component or structure (70) to be monitored and is adapted to support in space both said at least one sensor element (12, 12a, 12b) and said at least one target element (60), said anchoring and support assembly (65) having a hollow shape and comprising an opening (50) adapted to allow the passage of said mechanical component or structure (70) to be monitored,
**characterized in that** said anchoring and support assembly (65) comprises a first anchoring and support ring (80a) and a second anchoring and support ring (80b), facing each other, both of which being adapted to rigidly hold said multi-sensing system (5) to said mechanical component or structure (70) to be monitored, said first anchoring and support ring (80a) and said second anchoring and support ring (80b) being held to each other by way of a plurality of connecting beams (82).

2. The multi-sensing system (5) for detecting and measuring twisting and/or bending moment according to claim 1, **characterized in that** said at least one sensor element (12, 12a, 12b) and said at least one target element (60) are planar in shape and facing each other.

3. The multi-sensing system (5) for detecting and measuring twisting and/or bending moment according to claim 1 or 2, **characterized in that** it comprises at least one pair of sensor elements (12a, 12b) which are functionally connected to said terminal circuit assembly (10).

4. The multi-sensing system (5) for detecting and measuring twisting and/or bending moment according to one or more of the preceding claims, **characterized in that** said at least one target element (60) is rigidly held along said first anchoring and support ring (80a) or said second anchoring and support ring (80b).

5. The multi-sensing system (5) for detecting and measuring twisting and/or bending moment according to one or more of the preceding claims, **characterized in that** said plurality of connecting beams (82) are a base for holding at least one central beam (84), said at least one central beam (84) being a base for supporting at least one respective supporting plate (86) for the installation of said terminal circuit assembly (10).

6. The multi-sensing system (5) for detecting and measuring twisting and/or bending moment according to one or more of the preceding claims, **characterized in that** said terminal circuit assembly (10) further comprises a transceiver circuit (26) for the transmission and reception of digital data, in particular digital measurement data, with a remote device.

7. The multi-sensing system (5) for detecting and measuring twisting and/or bending moment according to one or more of the preceding claims, **characterized in that** it furthermore comprises a remote circuit assembly (36), which is configured to receive digital data, in particular digital measurement data, from said terminal circuit assembly (10), process them by way of a control logic, and transmit them to at least one remote external platform for acquisition, processing and/or display.

## Patentansprüche

1. Ein Mehrfacherfassungssystem (5) zur Detektion und Messung des Drehmoments und/oder Biegemoments, das mindestens ein Sensorelement (12, 12a, 12b) umfasst, das funktionell mit einem elektrischen Netzwerkaufbau (10) verbunden ist, welches konfiguriert ist, um das mindestens eine Sensorelement (12, 12a, 12b) zu verwalten und mindestens ein Zielelement (60) aus leitendem Material, das nahe dem mindestens einem Sensorelement (12, 12a, 12b) angeordnet ist, wobei der elektrische Netzwerkaufbau (10) eine Schnittstellenleitung für Wirbelstromsensoren (14) umfasst, die ausgebildet ist, um durch elektromagnetische Induktion das mindestens eine Sensorelement (12, 12a, 12b) so anzuregen, dass eine Relativbewegung zwischen dem mindestens einen Sensorelement (12, 12a, 12b) und dem mindestens einen Zielelement (60) eine Variation der Intensität der Wirbelströme an dem Zielelement (60) induziert, wobei das Zielelement (60) folglich eine Veränderung der Impedanz an den Klemmen des mindestens einen Sensorelements (12, 12a, 12b) induziert, und dadurch, dass es weiter einen Verankerungs- und Trägeraufbau (65) umfasst, der ausgebildet ist, um das Mehrfacherfassungssystem (5) fest an einer mechanischen Komponente oder Struktur (70) zu halten, die überwacht werden soll und ausgebildet ist, um sowohl das mindestens eine Sensorelement (12, 12a, 12b) als auch das mindestens eine Zielelement (60) im Raum zu tragen, wobei der Verankerungs- und Trägeraufbau (65) eine hohle Form hat und eine Öffnung (50) umfasst, die ausgebildet ist, um das Einsetzen der zu überwachenden mechanischen Komponente oder Struktur (70) zu ermöglichen,
**dadurch gekennzeichnet, dass** der Verankerungs- und Trägeraufbau (65) einen ersten Verankerungs- und Tragring (80a) und einen zweiten Verankerungs- und Tragring (80b) umfasst, die einander zugewandt sind, und die beide ausgebildet sind, um das Mehrfacherfassungssystem (5) fest an der mechanischen Komponente oder Struktur (70) zu halten, die überwacht werden soll, wobei der erste Verankerungs- und Tragring (80a) und der zweite Verankerungs- und Tragring (80b) durch eine Vielzahl von Verbindungsstegen (82) zusammengehalten werden.

2. Das Mehrfacherfassungssystem (5) zur Detektion und Messung des Drehmoments und/oder Biegemoments gemäß Anspruch 1, **dadurch gekennzeichnet, dass** das mindestens eine Sensorelement (12, 12a, 12b) und das mindestens eine Zielelement (60) planar in der Form und einander zugewandt sind.

3. Das Mehrfacherfassungssystem (5) zur Detektion und Messung des Drehmoments und/oder Biegemoments gemäß Anspruch 1 oder 2, **dadurch gekennzeichnet, dass** es mindestens ein Paar von Sensorelementen (12a, 12b) umfasst, die funktionell mit dem elektrischen Netzwerkaufbau (10) verbunden sind.

4. Das Mehrfacherfassungssystem (5) zur Detektion und Messung des Drehmoments und/oder Biegemoments gemäß einem oder mehreren der obigen Ansprüche, **dadurch gekennzeichnet, dass** das mindestens eine Zielelement (60) fest entlang dem ersten Verankerungs- und Tragring (80a) oder dem zweiten Verankerungs- und Tragring (80b) gehalten ist.

5. Das Mehrfacherfassungssystem (5) zur Detektion und Messung des Drehmoments und/oder Biegemoments gemäß einem oder mehreren der obigen Ansprüche, **dadurch gekennzeichnet, dass** die Vielzahl von Verbindungsstegen (82) eine Basis zum Halten mindestens einen zentralen Stegs (84) sind, wobei der mindestens eine zentrale Steg (84) eine Basis zum Tragen mindestens einer entsprechenden Stützplatte (86) für die Installation des elektrischen Netzwerkaufbaus (10) ist.

6. Das Mehrfacherfassungssystem (5) zur Detektion und Messung des Drehmoments und/oder Biegemoments gemäß einem oder mehreren der obigen Ansprüche, **dadurch gekennzeichnet, dass** der elektrische Netzwerkaufbau (10) weiter eine Transceiver-Schaltung (26) zum Senden und Empfangen digitaler Daten insbesondere digitaler Messdaten mit einer Remote-Vorrichtung umfasst.

7. Das Mehrfacherfassungssystem (5) zur Detektion und Messung des Drehmoments und/oder Biegemoments gemäß einem oder mehreren der obigen Ansprüche, **dadurch gekennzeichnet, dass** es weiter einen Fernschaltungsaufbau (36) umfasst, der konfiguriert ist, um digitale Daten, insbesondere digitale Messdaten von der elektrischen Netzwerkanordnung (10) zu empfangen, sie durch eine Steuerlogik zu verarbeiten und zur Erfassung, Verarbeitung und/oder Anzeige an mindestens eine externe Remote-Plattform zu senden.

## Revendications

1. Système multicapteur (5) pour la détection et la mesure d'un moment de torsion et/ou de flexion, qui comprend au moins un élément capteur (12, 12a, 12b) qui est connecté fonctionnellement à un ensemble circuit terminal (10) qui est configuré pour gérer ledit au moins un élément capteur (12, 12a, 12b), et au moins un élément cible (60) en matériau conducteur qui est placé à proximité dudit au moins un élément capteur (12, 12a, 12b), dans lequel ledit ensemble circuit terminal (10) comprend un circuit d'interface pour capteurs à courants de Foucault (14) qui est configuré pour exciter, en utilisant l'induction électromagnétique, ledit au moins un élément capteur (12, 12a, 12b) de manière qu'un déplacement relatif entre ledit au moins un élément capteur (12, 12a, 12b) et ledit au moins un élément cible (60) induise une variation d'intensité desdits courants de Foucault sur ledit élément cible (60), ledit élément cible (60) induisant en conséquence une variation d'impédance aux bornes dudit au moins un élément capteur (12, 12a, 12b), et en ce qu'il comprend en outre un ensemble d'ancrage et de support (65) qui est conçu pour retenir rigidement ledit système multicapteur (5) à un composant ou structure mécanique (70) à surveiller et est conçu pour supporter dans l'espace aussi bien ledit au moins un élément capteur (12, 12a, 12b) que ledit au moins un élément cible (60), ledit ensemble d'ancrage et de support (65) ayant une forme creuse et comprenant une ouverture (50) conçue pour permettre le passage dudit composant ou structure mécanique (70) à surveiller,
**caractérisé en ce que** ledit ensemble d'ancrage et de support (65) comprend une première bague d'ancrage et de support (80a) et une seconde bague d'ancrage et de support (80b), se faisant face, qui sont toutes les deux conçues pour retenir rigidement ledit système multicapteur (5) audit composant ou structure mécanique (70) à surveiller, ladite première bague d'ancrage et de support (80a) et ladite seconde bague d'ancrage et de support (80b) étant retenues l'une à l'autre au moyen d'une pluralité de poutres de liaison (82).

2. Système multicapteur (5) pour la détection et la mesure d'un moment de torsion et/ou de flexion selon la revendication 1, **caractérisé en ce que** ledit au moins un élément capteur (12, 12a, 12b) et ledit au moins un élément cible (60) sont de forme plane et se font face.

3. Système multicapteur (5) pour la détection et la mesure d'un moment de torsion et/ou de flexion selon la revendication 1 ou 2, **caractérisé en ce qu'**il comprend au moins une paire d'éléments capteurs (12a, 12b) qui sont connectés fonctionnellement audit ensemble circuit terminal (10).

4. Système multicapteur (5) pour la détection et la mesure d'un moment de torsion et/ou de flexion selon une ou plusieurs des revendications précédentes, **caractérisé en ce que** ledit au moins un élément cible (60) est retenu rigidement le long de ladite première bague d'ancrage et de support (80a) ou de ladite seconde bague d'ancrage et de support (80b).

5. Système multicapteur (5) pour la détection et la mesure d'un moment de torsion et/ou de flexion selon une ou plusieurs des revendications précédentes, **caractérisé en ce que** ladite pluralité de poutres de liaison (82) sont une base servant à retenir au moins une poutre centrale (84), ladite au moins une poutre centrale (84) étant une base servant à supporter au moins une plaque de support respective (86) pour l'installation dudit ensemble circuit terminal (10).

6. Système multicapteur (5) pour la détection et la mesure d'un moment de torsion et/ou de flexion selon une ou plusieurs des revendications précédentes, **caractérisé en ce que** ledit ensemble circuit terminal (10) comprend en outre un circuit émetteur-récepteur (26) pour l'émission et la réception de données numériques, en particulier de données de mesure numériques, avec un dispositif distant.

7. Système multicapteur (5) pour la détection et la mesure d'un moment de torsion et/ou de flexion selon une ou plusieurs des revendications précédentes, **caractérisé en ce qu'**il comprend en outre un ensemble circuit distant (36), qui est configuré pour recevoir des données numériques, en particulier des données de mesure numériques, en provenance dudit ensemble circuit terminal (10), les traiter au moyen d'une logique de commande, et les transmettre à au moins une plateforme externe distante d'acquisition, de traitement et/ou d'affichage.
